Europäisches Patentamt

European Patent Office

Office européen des brevets

(19)

(11) Veröffentlichungsnummer: **0 447 663 A1**

## (12) EUROPÄISCHE PATENTANMELDUNG

(21) Anmeldenummer: 90125032.4

(22) Anmeldetag: 20.12.90

(51) Int. Cl.⁵: **F27D 3/12**, F27B 9/24, B65G 17/08, B65G 17/40

(30) Priorität: 21.03.90 DE 4008979

(43) Veröffentlichungstag der Anmeldung:
**25.09.91 Patentblatt 91/39**

(84) Benannte Vertragsstaaten:
**CH DE FR GB IT LI**

(71) Anmelder: **Mahler Dienstleistungs-GmbH
Löten-Härten-Anlagenbau
Fritz-Müller-Strasse 95**
**W-7300 Esslingen(DE)**

(72) Erfinder: **Warga, Dieter
G. Hauptmannstrasse 1
W-7302 Ostfildern 2(DE)**

(74) Vertreter: **Witte, Alexander, Dr.-Ing. et al
Augustenstrasse 7
W-7000 Stuttgart 1(DE)**

(54) Durchlaufofen zur Wärmebehandlung von Werkstücken.

(57) Ein Durchlaufofen zur Wärmebehandlung von Werkstücken weist ein umlaufendes kettenartiges Förderband (18) aus Keramikmaterial auf, dessen mehrere nebeneinander und hintereinander angeordnete Glieder (34, 34', 34'', 34''', 36, 36', 36'', 36''', 38, 38', 38'') über quer zur Transportrichtung (19) verlaufende Stäbe untereinander verbunden sind. Dabei ist vorgesehen, daß in einer Querrichtung über die gesamte Breite des Förderbandes (18) gesehen, mehrere getrennte Stäbe (40, 44, 48) hintereinander angeordnet sind, und daß Lücken (42, 46, 50 bis 55) zwischen den getrennten Stäben, in Transportrichtung (19) gesehen, seitlich versetzt sind.

FIG. 2

EP 0 447 663 A1

Die Erfindung betrifft einen Durchlaufofen zur Wärmebehandlung von Werkstücken, mit einem umlaufenden kettenartigen Förderband aus Keramikmaterial, dessen mehrere, nebeneinander und hintereinander angeordnete Glieder über quer zur Transportrichtung verlaufende Stäbe untereinander verbunden sind.

Ein derartiger Durchlaufofen mit einem Förderband aus Keramikmaterial ist beispielsweise aus dem Firmenprospekt der CERAMIC FURNACE BELT Inc., U.S.A. bekannt.

Der Durchlaufofen weist eine Heiz- und eine Kühlzone auf, und das endlose Förderband läuft in einer Einlaufseite in den Durchlaufofen ein, durchläuft sowohl die heiße als auch die kalte Zone des Ofens und tritt am Auslaufende aus. Über eine Umlenkrolle wird das Förderband vom Auslaufende unter dem Ofen rückgeführt und über eine weitere Umlenkrolle der Einlaufseite wieder zugeführt.

Das Förderband selbst besteht aus mehreren, nebeneinander angeordneten Gliedern, die, in einer Querrichtung gesehen, über einen einzigen, über die gesamte Breite des Bandes durchgehenden Stab miteinander verbunden sind. Sowohl die einzelnen Glieder als auch die Stäbe bestehen aus einem Keramikmaterial, beispielsweise Aluminiumoxid. Förderbänder aus Keramikmaterialien haben gegenüber metallischen Bändern den Vorteil, daß sie leichter sind, höheren Temperaturen ausgesetzt werden können und außerdem chemisch resistenter sind.

Ein derartiges keramisches Förderband ist andauernd starken Temperaturschwankungen ausgesetzt, somit sehr großen wechselnden thermischen Beanspruchungen unterworfen. Außerdem wirken auch erhebliche mechanische Belastungen auf das Band ein, das beispielsweise bei einer Ofenlänge von 20 m ein beträchtliches Eigengewicht aufweist, so daß relativ große Reibungskräfte vorherrschen, denen dann entsprechend starke mechanische Zugkräfte zum Bewegen des Bandes überlagert werden müssen.

Die Kettenglieder sowie ein sie in Querrichtung durchgehend verbindender Stab sind während eines Umlaufweges schwankenden Temperaturen zwischen etwa 1.300° und 20°C ausgesetzt, so daß im Material selbst, trotz seines relativ geringen Ausdehnungskoeffizienten, hohe innere Spannungen auftreten.

Nachteilig an einem Förderband mit über die gesamte Breite durchreichenden Stäben ist, daß durch die wechselnden thermischen Belastungen und die andauernden mechanischen Belastungen, die über die Gesamtbreite aufgebauten Spannungen zu einem häufigen Bruch der Stäbe führen. Dies kann dann soweit führen, daß das Förderband im Bereich eines Querstabes völlig auseinanderreißt, wobei dies, falls dies in der heißen Zone geschieht, aufwendige Demontagen nach sich zieht.

Aufgabe der vorliegenden Erfindung ist daher, einen Durchlaufofen mit einem keramischen Förderband zu schaffen, das eine erhöhte Lebensdauer aufweist, d.h., daß insbesondere die Bruchgefahr der querverlaufenden Stäbe verringert wird.

Erfindungsgemäß wird die Aufgabe dadurch gelöst, daß in einer Querrichtung über die gesamte Breite des Förderbandes gesehen, mehrere getrennte Stäbe hintereinander vorgesehen sind, und daß Lücken zwischen den getrennten Stäben, in Transportrichtung gesehen, seitlich versetzt sind.

In den, gegenüber dem Stand der Technik kürzeren Verbindungsstäben, bauen sich geringere Spannungen auf, wodurch deren Bruchfestigkeit erhöht ist, so daß eine längere Lebensdauer der Stäbe vorhanden ist. Es wurde beobachtet, daß je länger die Stäbe sind, desto höher deren Bruchhäufigkeit ist. Dies kann so erklärt werden, daß die in den langen Stäben durch die thermische Wechselbelastung aufgebauten inneren Spannungen in Zusammenhang mit der andauernden mechanischen Belastung durch Zugkräfte des Antriebes und durch Druckkräfte der auf dem Förderband aufliegenden Werkstücke unter den harten wechselnden Bedingungen vom Keramikmaterial nicht mehr aufgenommen werden können und daher zum erhöhten Bruch führen. Keramische Materialien gehen meist unmittelbar vom vergleichsweise geringen elastischen Verformungsbereich mit keiner oder nur sehr geringer plastischer Verformung zum Bruch über. Keramische Materialien weisen außerdem die Neigung zur Mikrorißbildung auf, die bei steigender Belastung zu Makrorissen werden und zum Bruch führen. Der geringe elastische Verformungsbereich kann dann dazu führen, daß bei sehr breiten keramischen Förderbändern mit relativ langen durchgehenden Querstäben auch nicht das geringste Durchbiegen der Stäbe möglich ist, so daß, wie dies auch in der Praxis beobachtet wurde, sehr häufig ein Bruch der Stäbe stattfindet.

Die nun vorgeschlagene Maßnahme, einzelne kurze Teilstäbe zu verwenden, führt zu einer beträchtlich höheren Lebensdauer dieser Teilstäbe bzw. des Förderbandes. Durch versetztes Anordnen der Lücken in Längsrichtung entsteht dennoch ein fester Verbund der einzelnen Kettenglieder, d.h. es entsteht ein sowohl in Längs- als auch in Querrichtung stabiles Band. Das Vorsehen der kurzen Teilstäbe sowie der versetzten Anordnung der Lücken hat noch den weiteren wesentlichen Vorteil, nämlich daß, falls dennoch ein Bruch eines Querstabes stattfinden sollte, das Förderband durch die weiteren, auf dieser Transporthöhe angeordneten Teilstäbe soweit in Takt bleibt, daß ein weiterer Lauf des Förderbandes möglich ist. Ein notwendiges Ersetzen dieses Teilstabes kann zu einem späteren Zeitpunkt und an einem gut zugänglichen Bereich durchgeführt werden kann, so daß Manipulationen im heißen Ofengehäuse nicht mehr erforderlich sind. Dadurch kann dann die gerade zu behandelnde Charge an Werkstücken noch der Wärmebehandlung unterzogen werden und erst dann der Teilstab ausgewechselt werden.

Somit wird die Aufgabe vollkommen gelöst.

In einer weiteren Ausgestaltung der Erfindung ist das Förderband aus streifenförmigen Laschen aufgebaut, zwischen denen Buchsen aufgenommen sind, durch die die Stäbe verlaufen, wobei die jeweils äußeren stehenden Seitenlängskanten der Laschen die Förderbandflächen bilden.

Diese Maßnahme hat den Vorteil, daß eine Bandkettenstruktur mit zwischen den Laschen offenen Bereichen geschaffen ist, wobei aufgrund der offenen Bereiche eine Konvenktion und Wärmestrahlung durch das Band hindurch möglich ist. Dadurch ist es dann möglich, daß insbesondere in den Übergangszonen kalt-heiß / heiß-kalt ein rascher und gleichmäßiger Wärmeaustausch über die Breite des Förderbandes gesehen, stattfinden kann. Es liegt daher kein großer Wärmegradient in Querrichtung des Bandes an den Übergangsstellen vor, so daß die kurzen Teilstäbe, über ihre Länge gesehen, gleichmäßiger abkühlen oder erwärmen, wodurch die dabei unvermeidlichen thermischen Spannungen gleichmäßiger über die Länge verteilt aufgebaut bzw. abgebaut werden, was wiederum deren Lebensdauer erhöht. Die Werkstücke selbst liegen ja nur auf den stehenden Seitenlängskanten der Laschen auf, so daß dann die Werkstücke selbst ebenfalls rasch den Temperaturänderungen folgen, so daß nur geringe Temperaturgradienten zwischen den Werkstücken und den Keramikteilen, auf denen diese aufliegen, entstehen. Auch dies erhöht die Lebensdauer des Förderbandes.

In einer weiteren Ausgestaltung der Erfindung sind zwei aufeinanderfolgende, seitlich versetzte Lücken jeweils um zumindest eine Teilkettenbreite seitlich versetzt.

Diese Maßnahme hat den Vorteil, daß die mechanischen Eigenschaften des Förderbandes im Hinblick auf Zugfestigkeit und Durchbiegung durch die Lücken nicht beeinträchtigt sind.

In einer weiteren Ausgestaltung der Erfindung sind im seitlichen Randbereich des Förderbandes jeweils zumindest vier Laschen mit einer zwischenliegenden Buchse über einen Stab miteinander verbunden.

Diese Maßnahme hat den Vorteil, daß im seitlichen Randbereich des Förderbandes jeweils durchgehend zumindest ein Teilkettenabschnitt verläuft, so daß das Förderband beidseits über einen bestimmten Abschnitt durchgehend geschlossen ist, wodurch dessen Flächenstabilität erhöht ist.

In einer weiteren Ausgestaltung der Erfindung folgen in Längsrichtung zumindest jeweils zwei auf gleicher Breite liegende Lücken hintereinander.

Diese Maßnahme hat den Vorteil, daß in Transportrichtung gesehen zumindest zwei gleichartig ausgebildete Segmentabschnitte erfolgen, wodurch die Montage erleichtert wird.

In einer weiteren Ausgestaltung der Erfindung weisen die, den äußeren, geradlinig verlaufenden Seitenlängskanten gegenüberliegenden inneren Längskanten jeder Lasche einen gekrümmt verlaufenden, mittigen Bereich auf, dessen Krümmungssinn gleich dem der Umlenkrollen ist, um die das Förderband umläuft, wobei der Krümmungsradius geringer ist als der Radius der Umlenkrollen.

Diese Maßnahme hat den Vorteil, daß die geradlinigen äußeren Seitenkanten eine ebene Auflagefläche für die Werkstücke ergeben. Die gekrümmten inneren Längskanten, deren Krümmungsradius geringer als der Radius der Umlenkrollen ist, ermöglichen es, daß im Umlenkbereich des Transportbandes dieses jeweils im Bereich der Querstäbe auf der Außenfläche der Umlenkrollen anliegt. Dadurch wirken im Umlenkbereich keine solchen Biegekräfte auf die Laschen, wie dies der Fall wäre, falls die inneren Kanten geradlinig verlaufen würden. Auch diese Maßnahme führt zu einer Erhöhung der Lebensdauer der Laschen und somit auch des Förderbandes.

Es versteht sich, daß die vorstehend genannten und die nachstehend noch zu erläuternden Merkmale nicht nur in der jeweils angegebenen Kombination, sondern auch in anderen Kombinationen und in Alleinstellung einsetzbar sind, ohne den Rahmen der vorliegenden Erfindung zu verlassen.

Die Erfindung wird nachfolgend anhand eines ausgewählten Ausführungsbeispiels in Zusammenhang mit den beiliegenden Zeichnungen näher beschrieben und erläutert. Es zeigen:

Fig. 1    stark schematisiert einen Längsschnitt durch einen erfindungsgemäßen Durchlaufofen mit einem keramischen Förderband;

Fig. 2    eine ausschnittsweise, teilweise geschnittene Draufsicht auf ein keramisches Kettengliedförderband, und

Fig. 3    eine abschnittsweise Seitenansicht des Förderbandes von Fig. 2.

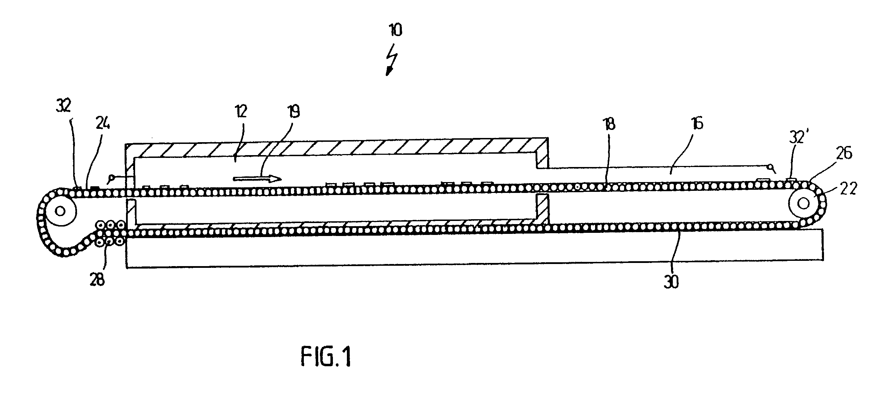

Ein in Fig. 1 dargestellter Durchlaufofen 10 weist eine Heizzone 12 und eine daran anschließende Auslaufzone 16 auf.

Durch den Durchlaufofen 10 läuft ein Förderband 18, dessen Laufrichtung durch einen Pfeil 19 angedeutet ist, d.h. es durchläuft den Ofen 10 von der Heiz- in Richtung Auslaufzone 16.

In der Heizzone 12 herrschen etwa 1.300° C, wobei am Ende der Auslaufzone 16 etwa Raumtemperatur erreicht ist.

An die Auslaufzone 16 schließt sich eine Entnahmezone 26 an, nach der das Förderband 18 um eine Umlenkrolle 20 gelenkt wird, und über eine Rückführung 30 zu einem Rollenantrieb 28 am Anfang des Durchlaufofens 10 zurückgeführt wird. Der Rollenantrieb 28 treibt das endlose umlaufende Förderband 18 an.

Nach Verlassen des Rollenantriebs 28 umläuft das Förderband 18 eine weitere Umlenkrolle 20 und läuft über eine Aufgabezone 24 wieder in die Heizzone 12 ein.

Im Betrieb des Durchlaufofens 10 werden daher Werkstücke 32 von der Aufgabezone 24 zur Entnahmezone 26 geführt, in der sie als behandelte Werkstücke 32' entnommen werden können.

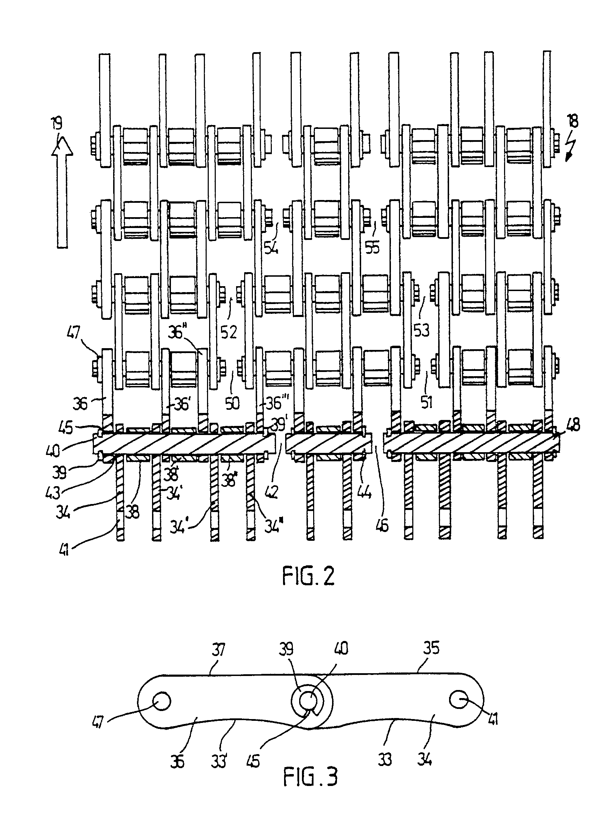

Wie insbesondere aus Fig. 2 und 3 zu entnehmen, ist das Förderband 18 aus streifenförmigen Laschen 34, 36 aufgebaut.

Über die Breite des Förderbandes 18 sind zehn Laschen 34, 34', 34 ... nebeneinander angeordnet, die jeweils an ihrem vorderen und hinteren Endbereich mit einer Öffnung 41 und 43 versehen sind.

Wie insbesondere aus Fig. 2 zu entnehmen, schließen sich in Förderrichtung 19 zehn weitere Laschen 36, 36', 36" an, die jeweils an ihren Endbereichen mit Öffnungen 45 und 47 versehen sind.

Die Laschen weisen jeweils geradlinig verlaufende obere, stehende Längskanten 35 bzw. 37 auf und sind derart untereinander verbunden, daß bei gestreckten Laschen 34 bzw. 36 diese in einer horizontalen Ebene liegen. Die Summe der Längskanten 35 und 37 stellen somit die Auflagefläche für die Werkstücke 32 dar.

Die Laschen weisen an ihren den geraden Längskanten 35 bzw. 37 gegenüberliegenden, in der Darstellung von Fig. 2 unteren, im Hinblick auf das geschlossene Förderband 18 (Fig. 1) gesehen, inneren Längskanten jeweils mittig einen gekrümmten Bereich 33, 33' auf, dessen Krümmungsradius etwas geringer ist als der Radius der Umlenkrollen 20, 22. Durch diese Ausgestaltung liegen die Laschen beim Umlaufen der Umlenkrollen 20, 22 lediglich im Bereich der sie verbindenden Stäbe auf der Außenseite der Umlenkrollen 20, 22 auf. Wären die unteren Kanten geradlinig, würden sie etwa mittig in einem punktförmigen Bereich auf der Umlenkrolle anliegen, wodurch dann der Bereich, in dem die Laschen über die Querstäbe miteinander verbunden sind, einen Abstand von der Außenseite der Umlenkrollen 20, 22 aufweisen würde. Dieser Abstand würde sich beim Umlaufen der Umlenkrollen verändern, wodurch dann wechselnde Biegekräfte auf die Laschen einwirken würden. Dies ist durch die gekrümmte Ausgestaltung ausgeschlossen.

Wie insbesondere aus Fig. 2 zu entnehmen, sind vier Laschen 34, 34', 34", 34"', mit vier Laschen 36, 36', 36". 36"' über einen ersten Stab 40 miteinander verbunden, der durch die endseitigen Öffnungen 43 bzw. 45 der Laschen 34 bzw. 36 hindurchreicht.

Die Anordnung ist dabei derart, daß zwei äußere Laschen 36, 36' zwei innenliegende Laschen 34, 34' umgeben, wobei zwischen den Laschen 34, 34' eine Buchse 38 vorgesehen ist, die den Abstand der Laschen 34, 34' untereinander bestimmt, und durch deren hohle Mitte der erste Stab 40 hindurchreicht. Zwischen den Laschen 36' und 36" ist eine weitere Buchse 38' aufgenommen. Die Laschen 36" und 36"' schließen zwei Laschen 34" und 34"' sowie eine zwischen den letzteren angeordnete Buchse 38" ein.

Die Laschen 34, 34', ...; 36, 36', ... der erste Stab 40 sowie die Buchsen 38, 38', 38" bestehen jeweils aus dem selben keramischen Material, insbesondere aus Aluminiumoxid.

Um die beiden äußeren, seitlich über die jeweils außenliegende Lasche 36 bzw. 36"' vorstehenden Enden des ersten Stabes 40, ist je ein Ring 39, 39' gelegt, der in einer hier nicht näher bezeichneten äußeren Ringnut des Stabes 40 eingelegt ist, so daß der Zusammenbau aus den acht Laschen 34, 34', ...; 36, 36', ..., den drei Buchsen 38, 38', 38" und dem Stab 40 unverlierbar durch die Ringe 39, 39' zusammengehalten ist.

In einem weiteren Ausführungsbeispiel sind statt der Ringe 39, 39' Stifte vorgesehen, die in radiale Bohrungen der überstehenden Endbereiche der Stäbe eingeschoben sind.

In Querrichtung von links nach rechts gesehen, schließt sich an diesen zuvor erwähnten Zusammenbau ein weiterer entsprechender Zusammenbau aus vier hier nicht näher gekennzeichneten Laschen zusammen, die über einen zweiten Stab 44 miteinander verbunden sind. Demzufolge besteht zwischen dem ersten Stab 40 und dem zweiten Stab 44 eine Lücke 42.

An dem durch den zweiten Stab 44 zusammengehaltenen Zusammenbau schließt sich ein weiterer Zusammenbau aus acht Laschen und drei Buchsen an, durch die mittig ein dritter Stab 48 hindurchreicht.

Demzufolge herrscht zwischen dem zweiten Stab 44 und dem dritten Stab 48 eine weitere Lücke 46.

In Transportrichtung 19 schließt sich an den in Fig. 2 in der Schnittdarstellung dargestellten Zusammenbau 3-1-3 (Zahl der Buchsen) mit zwei Lücken ein Zusammenbau 2-3-2 an, der ebenfalls zwei Lücken 50 und 51 aufweist.

Die Lücke 50 ist im Hinblick auf die Lücke 42 um eine Teilkettenbreite nach links, die Lücke 51 im Hinblick auf die Lücke 46 um eine Teilkettenbreite nach rechts versetzt.

An diesen Zusammenbau schließt sich in Transportrichtung 19 ein weiterer identischer 2-3-2 Zusammenbau an, der zwei Lücken 52, 53 aufweist. An diesen Zusammenbau schließt sich dann wiederum ein 3-1-3 Zusammenbau an, dessen Lücken 54 und 55 in Querrichtung gesehen auf gleicher Höhe liegen, wie die Lücken 42 und 46.

In dem linken und rechten Randbereich des Transportbandes 18 ist jeweils ein 2-er Zusammenbau vorgesehen, so daß jeweils im Randbereich ein Bereich über zwei durchgehende Teilketten vorhanden ist.

Es ist auch möglich, die Lücken 42, 46, 50 - 55 schmäler auszubilden, d.h. die überstehenden Endbereiche der Teilstäbe 40, 44 und 48 etwas länger auszubilden, ohne daß diese jedoch aneinander stoßen. Beim Montierenkann dann eine Buchse über diese vorstehenden Endbereiche geschoben werden, so daß die Lückenbereiche zwischen den Teilstäben durch eine Buchse abgedeckt sind.

## Patentansprüche

1. Durchlaufofen zur Wärmebehandlung von Werkstücken (32, 32'), mit einem umlaufenden kettenartigen Förderband (18) aus Keramikmaterial, dessen mehrere nebeneinander und hintereinander angeordnete Glieder (34, 34', 34", 34'''; 36, 36', 36", 36'''; 38, 38', 38") über quer zur Transportrichtung (19) verlaufende Stäbe untereinander verbunden sind, dadurch gekennzeichnet, daß in einer Querrichtung über die gesamte Breite des Förderbandes (18) gesehen, mehrere getrennte Stäbe (40, 44, 48) hintereinander vorgesehen sind, und daß Lücken (42, 46, 50 bis 55) zwischen den getrennten Stäben (40, 44, 48) in Transportrichtung (19) gesehen, seitlich versetzt sind.

2. Durchlaufofen nach Anspruch 1, dadurch gekennzeichnet, daß die Glieder des Förderbandes (18) aus streifenförmigen Laschen (34, 34', 34", 34''', 36, 36', 36", 36''') aufgebaut sind, zwischen denen Buchsen (38, 38', 38") angeordnet sind, durch die die Stäbe (40, 44, 48) verlaufen, wobei die äußeren stehenden Seitenlängskanten (35, 37) der Laschen die Förderbandfläche bilden.

3. Durchlaufofen nach Anspruch 1 oder 2, dadurch gekennzeichnet, daß zwei aufeinanderfolgende seitlich versetzte Lücken (42, 50; 46, 51; 52, 54; 53, 55) jeweils zumindest um eine Teilkettenbreite seitlich versetzt sind.

4. Förderband nach Anspruch 2 oder 3, dadurch gekennzeichnet, daß im seitlichen Randbereich des Förderbandes (18) jeweils zumindest vier Laschen (34, 34', 34", 36, 36', 36") mit einer zwischenliegenden Buchse (38, 38') über einen Stab (40) miteinander verbunden sind.

5. Durchlaufofen nach einem der Ansprüche 1 bis 4, dadurch gekennzeichnet, daß in Transportrichtung (19) zumindest jeweils zwei auf gleicher Breite liegende Lücken (50, 52; 51, 53) hintereinander folgen.

6. Durchlaufofen nach einem der Ansprüche 2 bis 5, dadurch gekennzeichnet, daß die den äußeren, geradlinig verlaufenden Seitenlängskanten (35, 37) gegenüber-liegenden, inneren Längskanten jeder Lasche (34, 34', 34", 34''', 36, 36', 36", 36''') einen gekrümmt verlaufenden mittigen Bereich (33, 33') aufweisen, dessen Krümmungssinn gleich dem der Umlenkrollen (20, 22) ist, um die das Förderband (18) umläuft, wobei der Krümmungsradius geringer ist als der Radius der Umlenkrollen (20, 22).

FIG.1

EP 0 447 663 A1

FIG. 2

FIG. 3

7

# EUROPÄISCHER RECHERCHENBERICHT

Nummer der Anmeldung

## EP 90 12 5032

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | US-A-2 986 387  (A.M. ILLING) <br> * Anspruch 1; Figuren * <br> – – – | 1 | F 27 D 3/12 <br> F 27 B 9/24 <br> B 65 G 17/08 <br> B 65 G 17/40 |
| Y | DE-B-1 187 994  (H. STEIGLEDER) <br> * Spalte 2, Zeilen 25-41 * <br> – – – | 1 | |
| A,P | US-A-4 911 681  (W.F. FUNKHOUSER) <br> * Ansprüche; Figuren * <br> – – – | 1,2 | |
| A | DE-A-3 132 317  (WABCO) <br> * Seite 7, Zeilen 1-8; Figuren * <br> – – – | 2 | |
| A | US-A-4 469 221  (H. ALBERT) <br> * Ansprüche; Figuren * <br> – – – – – | 6 | |

| RECHERCHIERTE SACHGEBIETE (Int. Cl.5) |
|---|
| F 27 B <br> F 27 D <br> B 65 G |

Der vorliegende Recherchenbericht wurde für alle Patentansprüche erstellt

| Recherchenort | Abschlußdatum der Recherche | Prüfer |
|---|---|---|
| Den Haag | 25 Juni 91 | COULOMB J.C. |